# EUROPEAN PATENT APPLICATION

(11) **EP 1 288 808 A1**
(43) Date of publication of application: **05.03.2003**
(21) Application number: 01934528.9
(22) Date of filing: 04.06.2001
(51) Int. Cl.: G06F 17/60, G06F 17/50

(54) **COMMODITY DISPLAYING/SELLING SYSTEM**

(30) Priority: 09.06.2000 JP 2000174295; 18.12.2000 JP 2000384522
(71) Applicant: Asa Co., Ltd., Kanagawa 253-0044 (JP)
(72) Inventor: ABEKAWA, Katsuyoshi, c/o ASA Co., Ltd., Chigasaki-shi, Kanagawa 253-0044 (JP)
(74) Representative: Townsend, Victoria Jayne
(86) International application number: JP0104704
(87) International publication number: WO01095184

(57) **Abstract**

A product displaying/selling system is provided which allows a user to purchase a product and to get the image of how the user would feel if the user tried on/wore the product without even leaving home, and which also helps the user minimize the gap between the image of how the user would feel about the product if the user tried on/wore the product and how the user really feels about the product when actually trying on/wearing the product after having purchased the product. In the system connected to a terminal of a client (1) via a network (4), a product requested by the client (1) is synthesized with an image of the client (1) to form a three-dimensional image for output to the terminal of the client (1), and the product can be purchased. The system ranks products for display and sale of the products.

## Description

### Technical Field

The present invention relates to a product displaying/selling system that allows a user to purchase a product without actually going to a store, and also helps the user bridge the gap between the image of how the user would feel if the user tried on/wore the product and how the user really feels when actually trying on/wearing the product after having purchased the product.

### Background Art

Generally, to purchase products such as shoes, glasses, clothing and decorations, a user actually goes to a store where a product that the user wishes to purchase is available, and then the user, for example, browses some products and tries on/wears them before deciding whether or not he/she should purchase one.

Further, latest developments in information technology have allowed users to purchase products via communication and the Internet or the like.

A user usually purchases products, etc. by checking mail-order magazines and by accessing home pages or the like where the products, etc. are displayed via a communications network such as the Internet, to browse the products, and then by following a purchasing procedure, if the user finds any product that the user likes, to purchase the product while making payment by means of funds transfer, credit card or the like.

However, there are problems that it is time-consuming to purchase a product by visiting a store where the product is available, and at the same time, that it also entails expenses, etc. to visit the store.

Further, to purchase the product via mail order and the Internet or the like, there exists another problem that the user cannot judge whether the product is good or not unless the user actually tries on/wears the product. The user usually finds, after having purchased the product, a considerable difference between the image of how the user would feel if the user tried on/wore the product and how the user really feels when actually trying on/wearing the purchased product.

### Disclosure of Invention

The present invention provides a product displaying/selling system that allows a user to purchase a product and to get the image of how the user would feel if the user tried on/wore the product without even leaving home, and that also helps the user minimize the gap between the image of how the user would feel about the product if the user tried on/wore the product and how the user really feels about the product when actually trying on/wearing the product after having purchased the product.

The present invention will be described hereinafter. It should be noted that while reference symbols used in the accompanying drawings are added in parentheses to facilitate the understanding of the invention, it is not intended to limit the invention to its embodiments shown in the drawings.

The present invention, which is connected to terminals of clients (1) via a network (4), is characterized by comprising: image input means (9b) for inputting information data about clients; product registration means (3b) for allowing merchants to register products; product search means (3e) for searching a product requested by a client from the products registered by the product registration means; image preparing/synthesizing means (3f) for synthesizing the product searched by the product search means with an image of the client prepared from information data inputted by the image input means into an image; output means (3d) for outputting the image synthesized by the image preparing/synthesizing means; settlement means (3c) for settling an account when the client purchases the product; and a database (3g) for storing the information data, whereby the product requested by the client is synthesized with the image of the client to form a three-dimensional image for output to the terminal of the client, and the client can purchase the product. Further, the invention is characterized in that the product search means is comprised of data input means (8a) and tally/search means (8b), for searching the product, whereby the tally/search means tallies data inputted by the data input means with information stored in a database to search the product for which the data has tallied with the information. Further, the invention is characterized in that the image preparing/synthesizing means is comprised of product input means (9a), image input means (9b), synthesizing/converting means (9c), and search means (9d), whereby the synthesizing/converting means synthesizes an image searched from client information stored in a database by the image input means or an externally inputted image with a product searched from product information stored in a database by the product input means, for conversion into a predetermined form. Further, the invention is characterized in that the product search means is comprised of a virtual space (13) and tally/search means (12a), the virtual space being formed of image preparing means (13a), image synthesizing means (13b), and products identified by product information stored in a database, whereby in the virtual space, a pseudo store in which the products identified by the product information stored in the database are arranged at predetermined locations is prepared by image preparing means, and the image of the client can be synthesized with the virtual space for location in the virtual space, and in the pseudo store, a product that is located in the pseudo store and selected by the image of the client located in the virtual space is synthesized with the image of the client, to allow the client to try on or wear the product.

According to this invention, a terminal owned by an individual establishes connection to this system to input an image of the individual (his/her measurements, etc.) and select a product that the individual wishes to purchase, and thus the individual's image is synthesized with the selected product to allow the individual to browse the selected product on the screen, whereby the individual can get the image of how the individual would feel if he/she tried on/wore the product and thus can minimize the gap between the image of how the individual would feel about the product if the individual tried on/wore the product and how the individual really feels when actually trying on/wearing the product after purchasing the product. Hence, the individual can feel secure about purchasing the product.

Further, the invention is characterized by comprising product ranking means (3h) for ranking a product which is registered by the product registration means and which is specified.

According to this invention, selectable products are ranked, whereby the individual can learn about the details of each product.

Further, the invention is characterized in that the settlement means performs, when the client purchases a product/service, a charging process in which when an amount for settlement is paid before or after a scheduled settlement date as a reference, the amount for settlement varies depending on a time difference from the scheduled settlement date.

According to this invention, if, when the client purchases a product, the amount for settlement is paid earlier than the scheduled settlement date to settle the account, the client can purchase the product a lower cost commensurate with the number of days (time period) from the scheduled settlement date.

Further, the invention is characterized by comprising three-dimensional image selecting means and product selecting means, whereby a client freely locates a product selected by the product selecting means in a three-dimensional image selected by the three-dimensional image selecting means for output to a terminal of the client as the three-dimensional image, and can purchase the product via the settlement means.

According to this invention, in the case of purchasing a product such as furniture, interior goods or the like, when a user selects a space (three-dimensional image) in which to locate the product, the user can locate the product freely in the space on the screen, whereby the user can easily get the image of whether or not the product matches with the space in which to locate the product, and thus the invention is beneficial when the user selects the product for purchase.

Further, the invention is characterized by comprising product ranking means for ranking a product which is selected by the product selecting means and which is specified.

According to this invention, selectable products are ranked, whereby the individual can learn about the details of each product.

Further, the invention is characterized in that the product ranking means causes an external ranking institution to rank products, and is provided with a function for displaying a ranking of a product having tallied with the specified product, on a screen of the terminal of the client.

According to this invention, the products are ranked by an external institution, whereby the credibility of the rankings is increased and thus the user can feel secure about purchasing a product.

Further, the invention is characterized in that the product ranking means is provided with element fields for indicating elements related to product quality, product ranking fields for giving marks to the elements to rank products of respective companies, and a client input field for indicating marks given by the client to the elements to rank the elements, and is also provided with a function for comparing the marks inputted to the client input field with the marks given to rank the products of the respective companies to display, in terms of marks, the best fit rankings for the client on the screen of the terminal of the client.

According to this invention, when a user, for selecting a product, inputs elements that the user wishes the product to have, the best fit product for the user is displayed in terms of marks, whereby the user can select (purchase) the best fit product for the user.

Further, the invention is characterized in that the product ranking means is provided with a revising field for recommended sale by a merchant.

According to this invention, a revising field for giving weight to each product-related element (item) recommended by a merchant is added to a ranking table, whereby a sale in which a merchant's view is reflected can be implemented.

Further, the invention is characterized by comprising person selecting means, whereby a person selected by the person selecting means is specified, and the specified person is located to form the three-dimensional image. Further, the invention is characterized by comprising image input means, and a function for locating an image inputted by the image input means in the three-dimensional image.

According to this invention, a third person other than a user; or a merchant or the like can be involved on the screen, whereby the user can communicate with and be advised by the third person, or the merchant or the like.

Further, the invention is characterized in that the image input means is provided with rails (19a, 19a) arranged in a manner surrounding a box upward, downward, leftward, rightward, frontward, and rearward, and with image devices (19, ..., 19) arranged to be movable along the rails in six directions which are upward, downward, leftward, rightward, frontward, and rearward directions, and the image input means is provided with a function for preparing a three-dimensional image from an image formed using the image devices moving along the six directions, for image input.

According to this invention, information data (physique, measurements, etc.) about the image of a user can be easily measured, for storage in a database as information data.

Further, the invention is characterized by comprising price negotiation means for allowing the client to conduct price negotiations with a merchant when the client purchases a product.

According to this invention, the user can directly negotiate with a merchant or the like for a lower price.

Further, the invention is characterized by comprising warning means for limiting connection to a terminal violating forbidden matters.

According to this invention, trouble, etc. caused by connection to general terminals or the like can be suppressed.

### Brief Description of Drawings

FIG. 1 is a system diagram showing an overview of a product displaying/selling system which is the present invention;
FIG. 2 is a system diagram of the product displaying/selling system which is the invention;
FIG. 3 shows membership registration means of the product displaying/selling system which is the invention;
FIG. 4 shows product registration means of the product displaying/selling system which is the invention;
FIG. 5 is a system diagram of product search means of the product displaying/selling system which is the invention;
FIG. 6 is a system diagram of image preparing/synthesizing means of the product displaying/selling system which is the invention;
FIG. 7 is a system diagram of settlement means of the product displaying/selling system which is the invention;
FIG. 8 is another system diagram of the product search means of the product displaying/selling system which is the invention;
FIG. 9 is a flow diagram of a product purchasing process according to an embodiment of the product displaying/selling system which is the invention;
FIG. 10 shows an embodiment of image input means of the product displaying/selling system which is the invention;
FIG. 11 is a flow diagram of a charging process performed by the settlement means of the product displaying/selling system which is the invention;
FIG. 12 is a system diagram of another embodiment of the present system;
FIG. 13 is a diagram showing a flow of a selling process in a system according to another embodiment;
FIG. 14 is a diagram showing a flow of a product purchasing process in another embodiment; and
FIG. 15 is a diagram showing a flow of person selecting means in still another embodiment.

### Best Mode for Carrying out the Invention

Embodiments of a product displaying/selling system, which is the present invention, will hereinafter be described in detail.

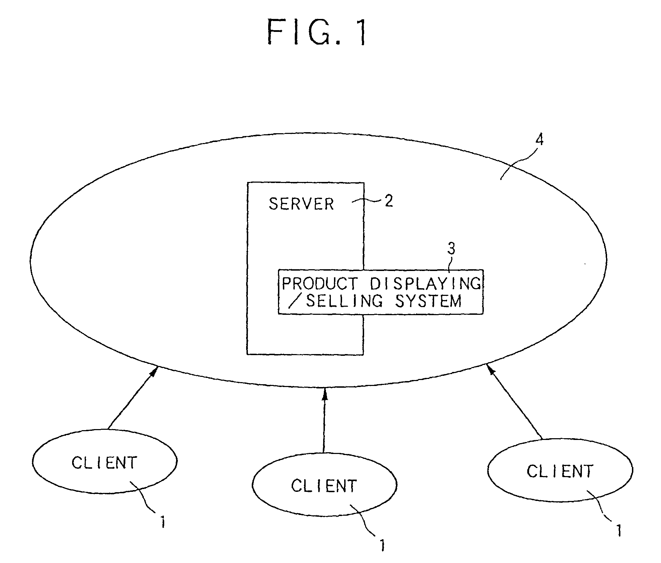

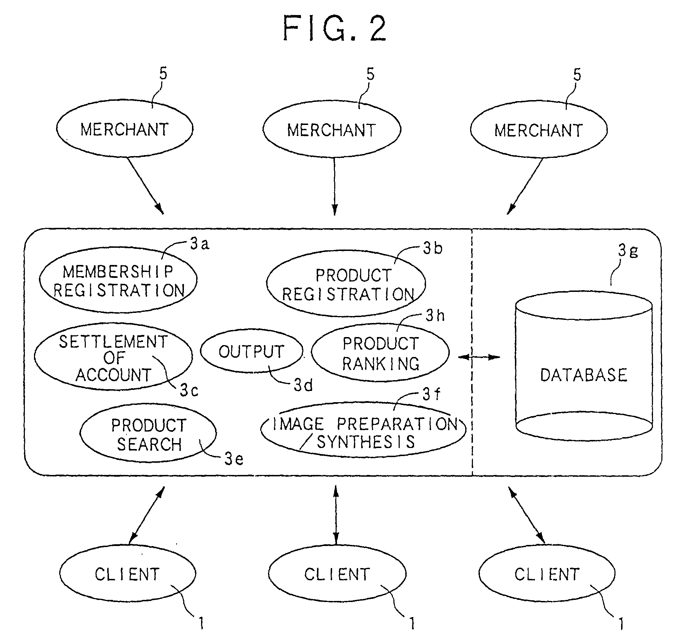

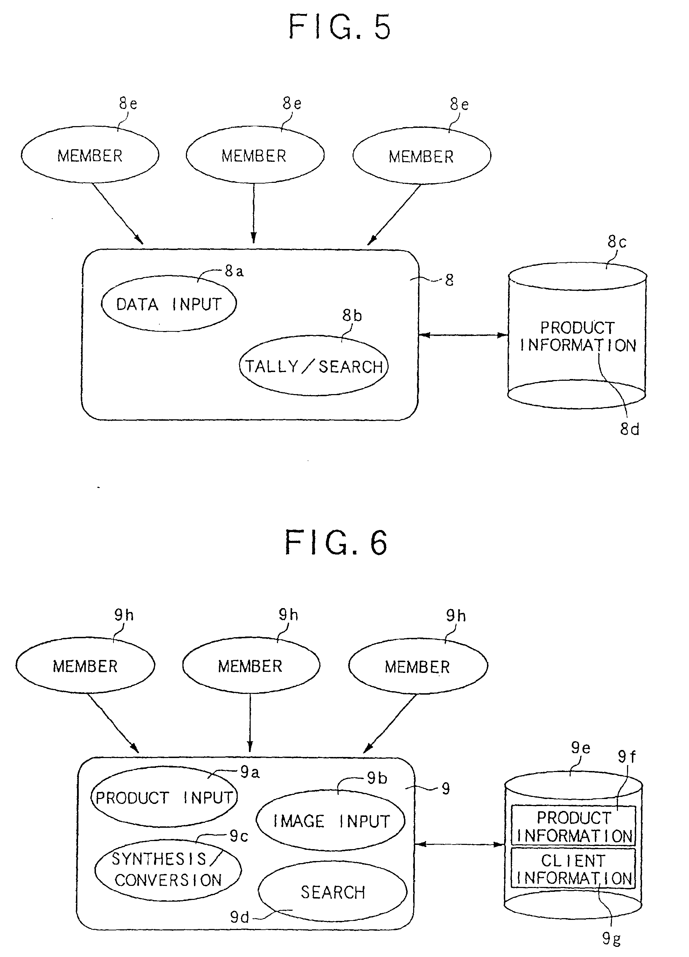

In a server 2, which is an HTTP-based Web server 2 into/from which clients 1, 1, 1 can freely enter/exit via a network 4 as shown in FIG. 1, this system comprises, as shown in FIGS. 2 and 6, membership registration means 3a that allows the clients 1, 1, 1 to register for membership, image input means 9b that inputs information data about the clients, product registration means 3b that allows merchants 5, 5, 5 to register products, product ranking means 3h that ranks the registered products, product search means 3e that searches a product requested by a client, image preparing/synthesizing means 3f that prepares an image of the product searched by the product search means and an image of the client, for synthesis, output means 3d that outputs the image synthesized by the image preparing/synthesizing means, settlement means 3c that settles the account when the client purchases a product, and a database 3g that stores registered information. This system thus causes the image preparing/synthesizing means 3f to synthesize the client-requested product searched by the product search means 3e with the image of the client to form a three-dimensional image for output to a client's terminal by the output means 3d, and also causes the settlement means 3c to settle the account when the client requests to purchase the product, whereby the client can purchase the product.

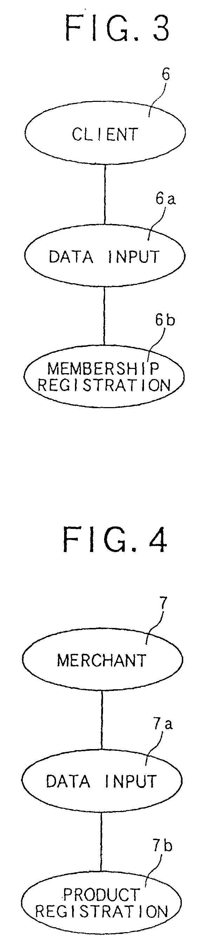

Membership registration 6b of the product displaying/selling system according to the invention is performed as follows. As shown in FIG. 3, a client 6 performs data input 6a for membership registration with the product displaying/selling system that exists on the network, to have the inputted data 6a stored in the database 3g shown in FIG. 2 as member information. The data 6a for input includes an address, name, telephone number, credit card number, measurements of various parts of the body including height and weight, and physique. During the membership registration 6b, it is not required to input all the data 6a; it suffices that at least the address, name, telephone number, and credit card number be inputted. Other data 6a can be inputted during selection of products, etc. Once the membership registration 6b is completed, the inputted data is stored in the database 3g shown in FIG. 2 as client information. Further, the data for input is not limited to those mentioned above.

Product registration 7b of the product displaying/selling system according to the invention is performed as follows. As shown in FIG. 4, a merchant 6 performs data input 7a to register a product with the product displaying/selling system that exists on the network, to have the inputted data 7a stored in the database 3g shown in FIG. 2 as product information. The data 7a for input includes the kind, size. color, weight, material, effect of a product for registration. Once the product registration 7b is completed, the inputted data 7a is stored in the database 3g shown in FIG. 2 as the product information. Further, the data for input is not limited to those mentioned above. Further, a registered merchant 7 may be examined upon product registration 7b with the product displaying/selling system of the invention so that the system accepts only a qualified merchant 7 as a member store.

Further, as shown in FIG. 5, the product displaying/selling system is characterized by comprising product search means 8 that includes data input means 8a and tally/search means 8b which serve to search a product, and by causing the tally/search means 8b to first tally data inputted by members 8e, 8e, 8e via the data input means 8a with product information 8d stored in a database 8c, and to then search for any tallied product. When a client performs data input 8a by inputting or selecting the kind, trade name or the like of a product that the client requests to search, the product is searched.

Further, as shown in FIG. 6, the product displaying/selling system is characterized by comprising image preparing/synthesizing means 9 that includes product input means 9a, image input means 9b, synthesizing/converting means 9c, and search means 9d, and by causing the synthesizing/converting means 9c to synthesize an image searched 9d from client information 9g stored in a database 9e by the image input means 9b or an image externally inputted by each of members 9h, 9h, 9h, with a product searched from product information 9f stored in the database 9e by the product input means 9a, for conversion into a predetermined form.

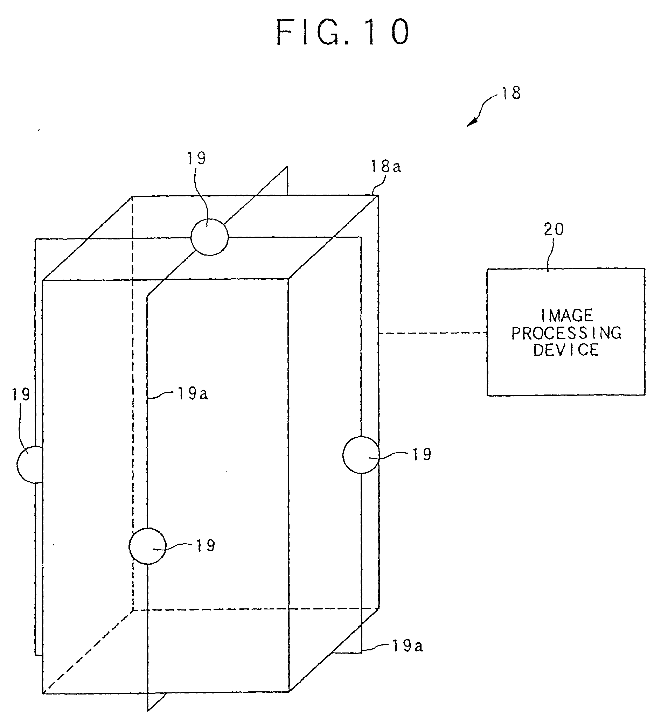

The image input means 9b may be a method of preparing an image by inputting information data about client's physical characteristics (the client's measurements, physique, etc.), a method of inputting data using an image device (a digital camera or the like), or image devices such as shown in FIG. 10 which will be described hereinafter.

The product input means 9a is linked with the product search means 8 shown in FIG.5, and selects or inputs any product searched by the product search means 8. The image input means 9b extracts an image searched by the search means 9d from the client information 9g stored in the database 9e shown in FIG. 6 if the image has been registered as the client information during the membership registration 6b shown in FIG. 3, or causes the members 9h, 9h, 9h to externally input images if the images have not been registered as the client information 9g.

The product input means 9a and the image input means 9b convert the inputted data into a predetermined form so that the synthesizing/converting means 9c that can automatically synthesize a product with a client's image outputs the synthesized image on a screen.

Further, as shown in FIG. 10, the image input means 9b is comprised of an image forming device 18 and an image processing device 20. The image forming device 18 is provided with rails 19a, 19a arranged in a manner surrounding a box 18a upward, downward, leftward, rightward, frontward, and rearward, and with image devices 19, ≅≅≅, 19 arranged to be movable along the rails 19a, 19a in six directions, i.e., upward, downward, leftward, rightward, frontward, and rearward. The image processing device 20 is provided with a function for preparing a three-dimensional image from images formed by the image devices 19, ≅≅≅, 19 moving along the six directions, i.e., upward, downward, leftward, rightward, frontward, and rearward on the rails 19a, 19a, and inputting the prepared image. Thus, the image processing device 20 can add the image data to the database 9g shown in FIG. 6 as the client information 9g about the relevant client. Digital video cameras, digital cameras, or the like may be used as the image devices 19, ..., 19.

Further, as shown in FIG. the product displaying/selling system is characterized by comprising product search means 12 that includes a virtual space 13 and tally/search means 12a, the virtual space 13 being formed of image preparing means 13a, image synthesizing means 13b, and products stored as product information 12c in a database 12b, and by allowing the image preparing means 13a to prepare, in the virtual space 13, a pseudo store where the products stored as the product information 12c in the database 12b are arranged at predetermined locations, to synthesize the image of a client with the virtual space 13 for location in the virtual space 13, and to synthesize, in the pseudo store, a product that is arranged therein and selected by the client's image located in the space 13, with the client's image to allow the client to try on/wear the product.

The above-indicated pseudo store may be generated automatically and/or manually upon completion of product registration shown in FIG. 4. The client's image may also be generated automatically and/or manually upon completion of client registration shown in FIG. 3.

Further, the client's image located in the virtual space 13 can move around the pseudo store, and also select a product in the pseudo store. The selected product can be synthesized with the client' s image as indicated above, whereby the client can try on/wear the product.

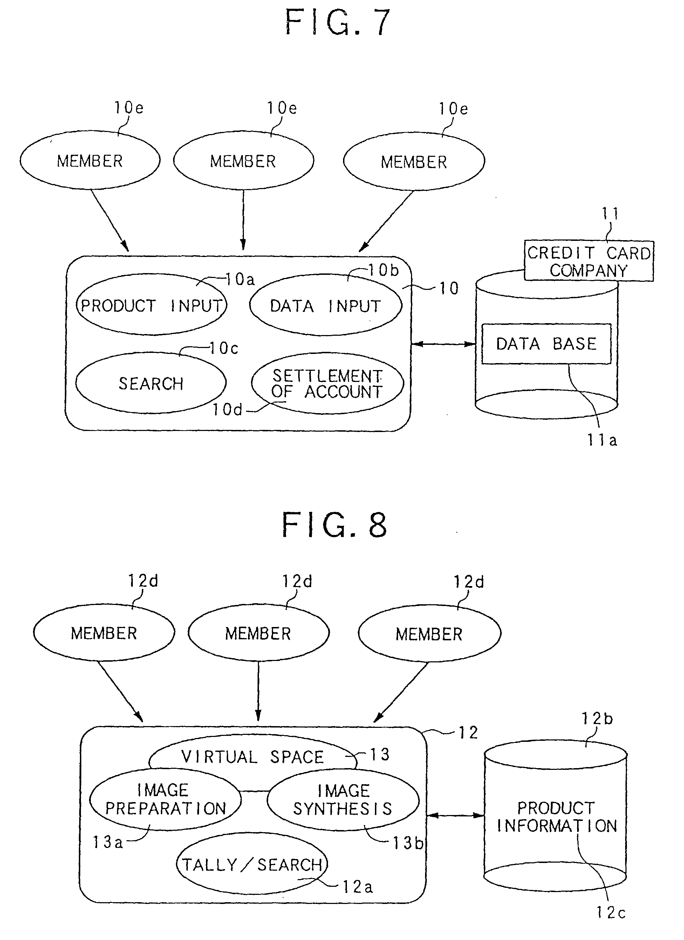

The settlement means according to the invention comprises, as shown in FIG. 7, product input means 10a, data input means 10b for inputting data such as a payment method, search means 10c, settlement means 10d, and a database 11a of a credit card company 11. When each of members 10e, 10e, 10e manually inputs a product for purchase or when such a product is automatically inputted, and when the member then performs data input 10b by inputting data such as a payment method, the settlement means makes a search in the database 11a of the credit card company 11 in order to settle the relevant account, and settles the account if permitted to do so. Further, other than by credit card, payment can be made at a convenience store, by funds transfer to a bank or the like.

Further, the settlement means may be a charging process to be performed when a purchaser purchases a product/service, wherein the amount for settlement varies depending on the difference in time period from a scheduled settlement date as a reference when the amount is paid earlier or later than that date.

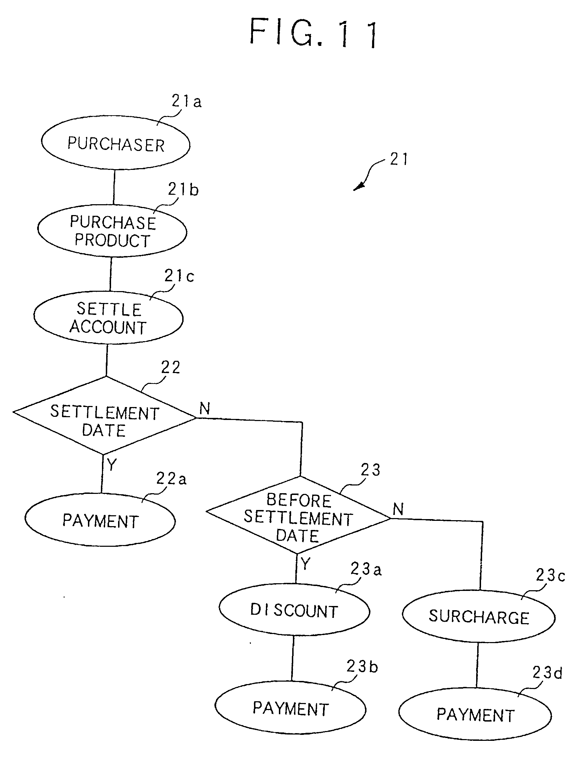

As shown in FIG. 11, when a purchaser 21a purchases 21b a product or the like, settles the account 21c, and thereafter makes payment before the scheduled settlement date, the account is settled with a discount 23a based on a predetermined rate for payment 22a. Conversely, when payment is made later than the scheduled settlement date, the account is settled with a surcharge 23c based on a predetermined surcharge rate for payment 23d.

For example, let it be assumed that the discount rate and the surcharge rate are set to 1% a day in the above charging process. When the purchaser makes payment 10 days before the scheduled settlement date, an amount equal to 1% of the amount for settlement is deducted from the price, and thus the purchaser can purchase the product or the like by paying an amount smaller than the actual amount for settlement. Conversely, when payment is made 10 days after the scheduled settlement date, an amount equal to 1% of the amount for settlement is additionally put on the price. Further, in the case of payment on loan, the discount rate or the surcharge rate may be subtracted or added to the interest rate on the loan, similarly to the above.

Further, the product displaying/selling system of the invention is characterized in that the product ranking means 3h shown in FIG. 2 causes an external ranking institution to rank the products registered 3b by the merchants 5, 5, 5 to store ranking information in the database 3g. As indicated above, the ranking institution is an external institution having nothing to do with this product displaying/selling system. By using the external ranking institution, clients can feel secure about the reliability of the products, and hence can minimize trouble, etc. associated with their purchase.

This ranking institution is very important and effective for perishables in particular. The ranking institution ranks products, considering their quality, brand, specification, origin, etc. based on information about the products, and outputs their rankings together with a display of the products. Thus, the purchaser can feel more secure about purchasing the products.

Further, in another embodiment, for example, in the case of ranking men's coats, the product ranking means classifies elements related to the quality of coat, and further their details. A men' s coat ranking table is shown as Table 1. As shown in the table, the coat-related elements are classified into functionality, fashionableness, price, convenience, size, etc. Further, the details of these elements are classified into waterproofness, airtightness, warmness, weight, etc. The client gives priority to (or ranks) some of the thus classified elements which he/she thinks are important in selecting a product. The ranking is made by giving marks up to a total of 100, in which the higher the marks, the more important the product. In contrast to this, coats of various companies (Company A, B, or C) are ranked objectively. That is, if the coat of each company has any elements to which the client has given priority, the marks given to such elements are used to rank each company's coat.

A comparison is made between the client's priority marks and the ranking marks given to each company, for display on the screen of a client's terminal. Through the comparison of the marks, the products are ranked in a manner presenting to the client the best fit product for the client. In Table 1, a coat of Company C is ranked first, receiving a total of 100. A ranking table for ordinary sale is shown as Table 1, and a table in which such a ranking table is sorted in the order of priority levels given by the client is shown as Table 2.

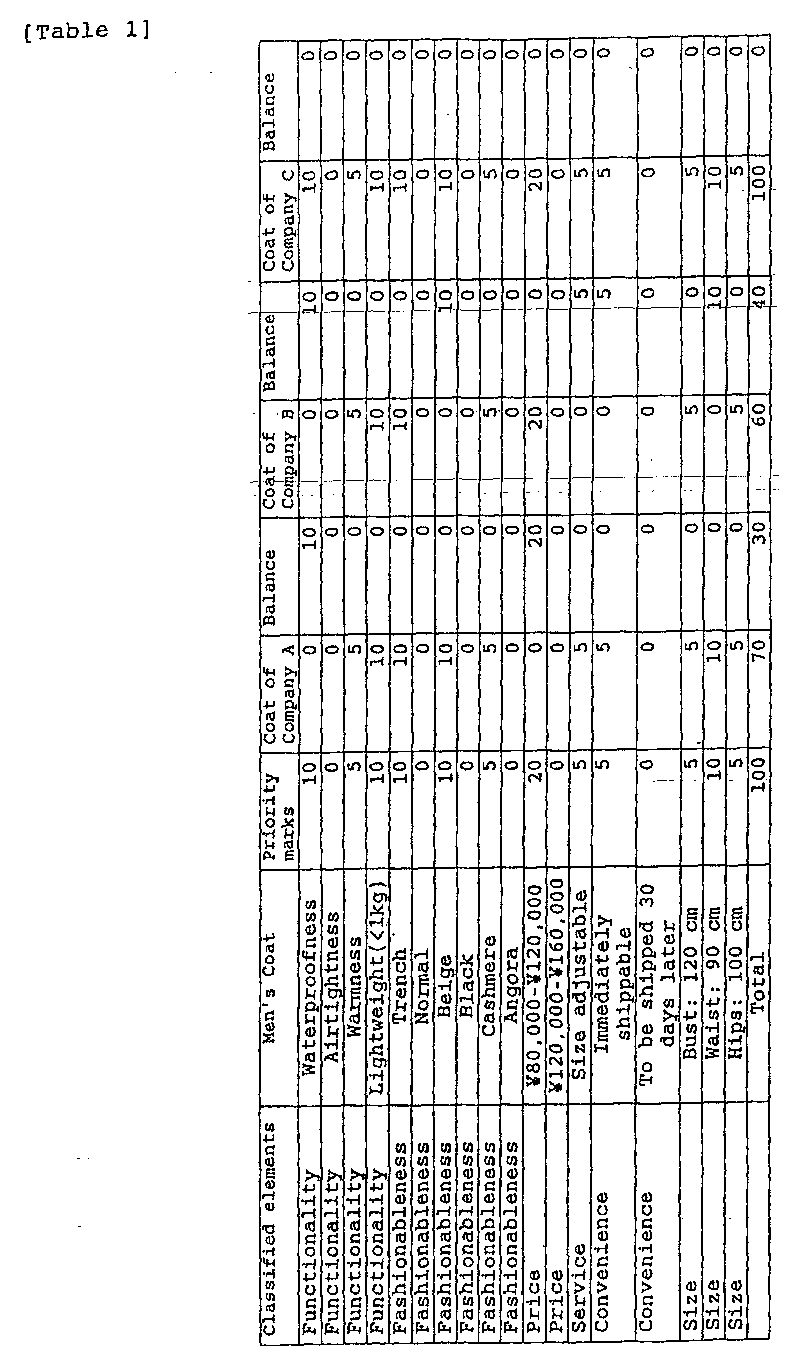

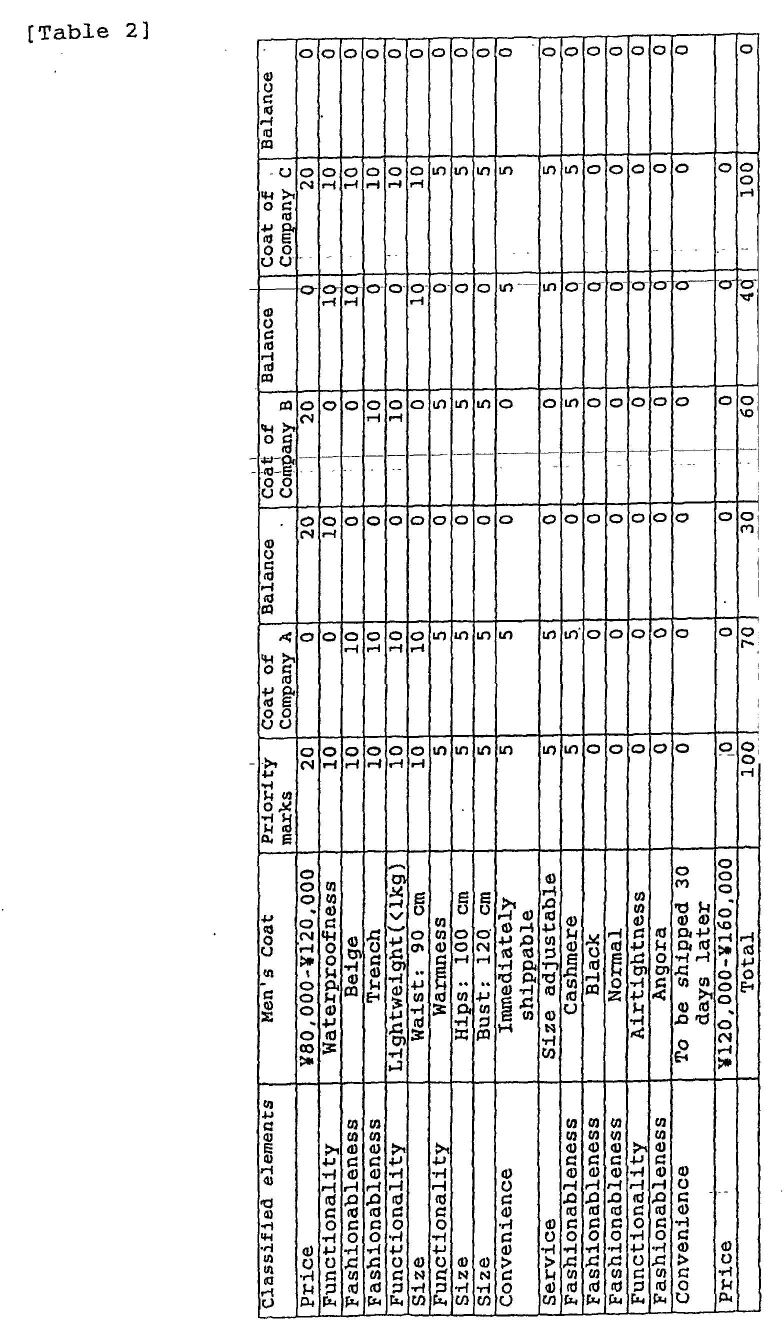

In ordinary sale, the ranking table shown as Table 1 is displayed on the client's screen, so that the client can make good use of the table as advice about purchasing a product. Further, as shown in Table 2, Table 1 can become more user-friendly when sorted in the order of priority levels given by the client. Further, companies evaluate products from their own viewpoint. In this case, the ranking tables shown as Tables 1 and 2 need to be revised. A revised ranking table is shown as Table 3.

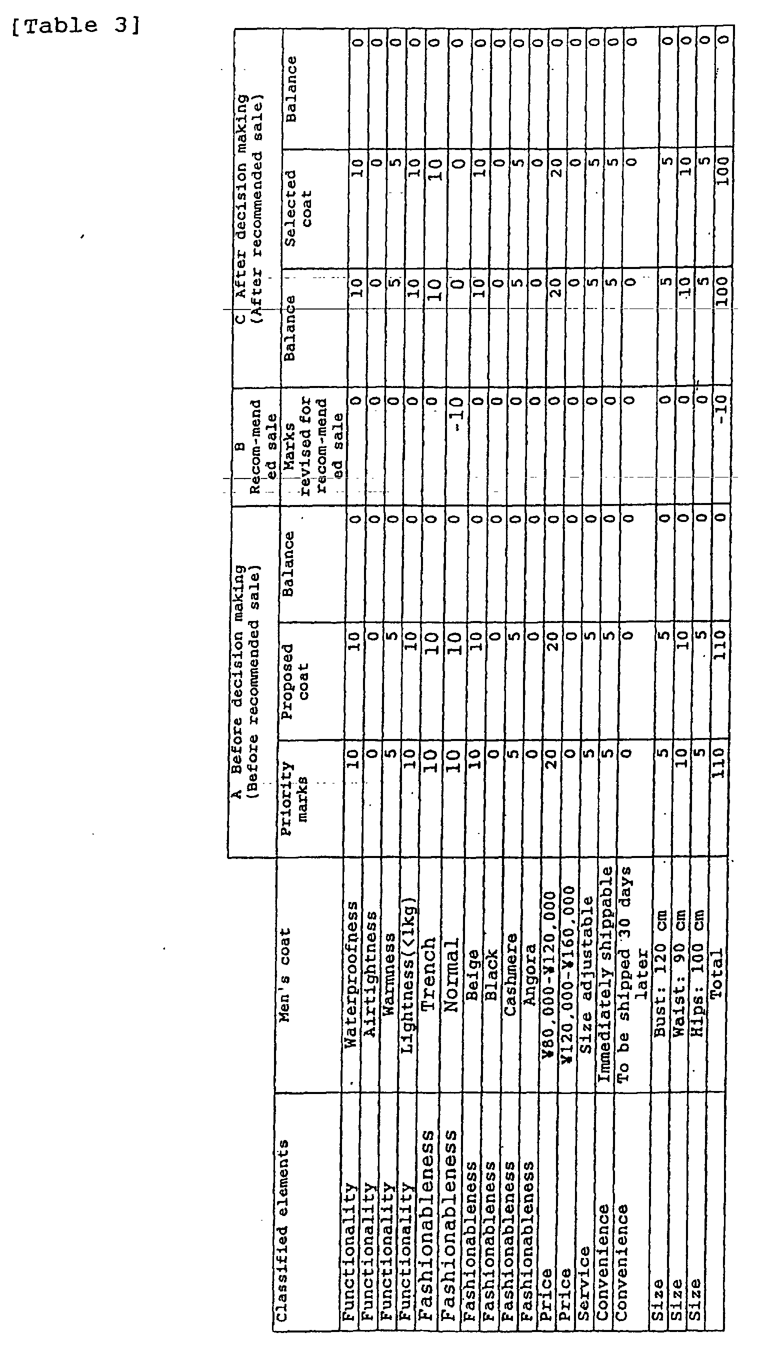

As shown in Table 3, a revision of the rankings based on the company's own viewpoint is made as follows. For example, as to the classified element "fashionableness," the client prioritizes "trench" and "normal" equally, thus giving 110 as his/her priority marks, whereas the company would like to recommend "trench." In this case, a revision is made to the ranking table shown as Table 3 to evaluate "trench" more highly than "normal" as in the ranking table shown as Table 1.

In this system, means is provided to allow the user to select any of the ranking tables shown as Tables 1 and 2, and Table 3 for recommended sale, whereby the user can select ranking tables for use as a basis of judgment on purchasing a product.

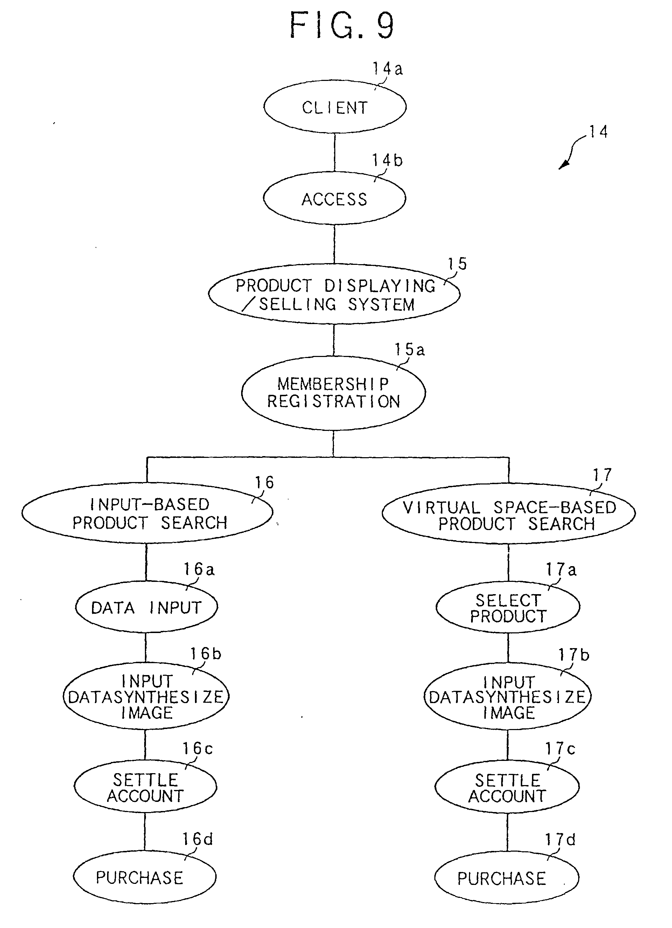

A flow diagram of a product purchasing process according to an embodiment of the product displaying/selling system of the invention is shown in FIG. 9. As shown in FIG. 9, a client 14a, utilizing a communication network such as the Internet, directly accesses 14b a product displaying/selling system 15 existing on the network when the client knows its address, or otherwise accesses 14b the system 15 from a Portal site or the like. After having accessed 14b the product displaying/selling system 15, the client can perform membership registration 15a and then search a product.

The membership registration 15a is performed by inputting data including the address, name, telephone number, credit card number, and private information (height, weight, measurements, vision, etc.) of the client, and also his/her image or the like. The membership registration 15a can be completed without inputting all the data mentioned above. It suffices that the client input at least the address, name, telephone number, and credit card number. The client can input the other data when selecting a product or the like. Further, the data for input are not limited to those mentioned above. Product search can be made by a method 16 in which a product for purchase is inputted, or by a virtual space-based method 17.

The data input-based product search method 16 prompts the client to input product data 16a to search for a product, and then the client synthesizes 16b the searched product with his/her image to browse the synthesized image to decide whether the client should purchase the product or not. If the client decides to purchase the product, the client inputs a settlement method and settles the account 16c, whereby the client can purchase 16d the product.

On the other hand, in the virtual space-based product search method 17, a shopping mall (a group of pseudo stores) and the image of a member are arranged at predetermined locations on a screen, whereby the member moves around a store in which the member wishes to browse by moving the member's image, to browse and select 17a a product in the store. After having selected a product, the member can try on/wear, etc. the product, and by synthesizing 17b the member's image with the selected product, the member can enjoy a more realistic browse. To purchase the product, the member inputs a settlement method and settles the account 17c, whereby the member can purchase 17d the product. Notably, the member can do shopping from one store to another as follows. The member purchases a hat in one store and puts the hat on. Then, the member enters another store with the hat on and purchases a coat and wears the coat. Thereafter, the member moves to still another store with the coat on to purchase a pair of shoes, and so on. In this way, the member can do shopping while checking if the selected products are well coordinated with one another or not.

Further, the products referred to in the above description are not limited to those such as shoes, glasses, clothing, and decorations, but include services rendered for cosmetic surgery, by beauty parlors or hair salons, and in the sale of cosmetics, etc.

Further, in another embodiment, this system allows for simulation in a virtual reality space (virtual space) during purchase of furniture, interior goods, etc. For example, in a shopping mall as a virtual reality space where furniture, ornaments, etc. related to interior decoration for rooms are sold, a consumer wishes to actually lay out products in a room to see if the products are well coordinated with the room or not. To do so, this system is provided with room division selecting means and product selecting means. The room division selecting means prepares many rooms for simulation based on their space, use, etc. Further, the product selecting means allows the consumer to select a product sold by a store in the shopping mall, and the selected product can be laid out freely in the room selected by the room division selecting means.

For example, a three-dimensional space is formed on the screen to prepare a shopping mall in the space. Various stores are prepared in the shopping mall. For example, a store is prepared which deals in furniture, ornaments, etc. related to interior decoration for rooms. This store deals in interior goods including furniture such as wardrobes, cupboards, bookshelves and beds, ornaments such as pictures, ornamental plates and pots, and other interior materials such as curtains and lighting fixtures. In this case, the consumer selects the type, space, etc. of a room using the room division selecting means to prepare a three-dimensional image of the room. Next, the consumer selects products such as furniture and interior goods for the room using the product selecting means and lays out the selected products in the room for simulation, whereby the consumer can select the best fit products. Of course, the consumer can purchase any product selected for the simulation, which he/she likes.

In another embodiment, this system may provide for similar simulation directed to other industrial products. For example, a consumer can simulate installation of a machine to plant, placement of cookware in a kitchen, etc. Further, a consumer can simulate incorporation of mechanical parts into a vehicle, bolts and nuts into a mechanical part, and a bolt into a nut, for example.

In still another embodiment, this system may be provided with various stores in a virtual reality space to build a shopping mall for actual sale of products, in which space a user is three-dimensionalized based on information data so that the user can freely move around any of the stores.

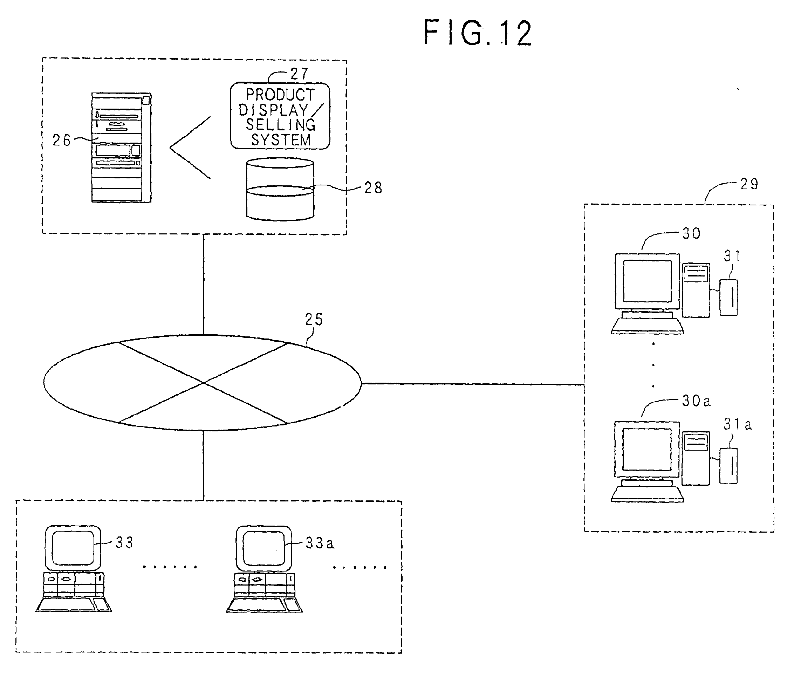

Specifically, a system diagram according to this embodiment is shown in FIG. 12. As shown in the figure, a database 28 and a system 27 are stored in a server 26, and the server 26 is connected to terminals 30, 30a ≅≅≅ of general users via a network 25 for browse and use of the system. The database 28 stores information data about various stores, products, etc. The system 27 prepares a virtual reality space such as a shopping mall, prepares a three-dimensional person or the like from detailed information data to display and/or move the three-dimensional person or the like in the shopping mall, for actual display and sale of products at a store in the shopping mall. It is more desirable that the terminals 30, 30a ≅≅≅ be provided with terminals 31, 31a ... in which IC cards can be utilized. Further, connected to this system are terminals 33, 33a ... of merchants 32 who own the stores prepared in the shopping mall. The merchants 32 can set up stores in the shopping mall by registration. Further, these merchants 32 send information about the kinds of their products and other data, whereby the products can be exhibited in their stores.

Products are sold basically by an automatic program, although merchants may, of course, be involved. In sales based on the automatic program, reference is made to the ranking tables. For example, a user who wishes to purchase a coat inputs his/her ranking marks as to coat-related elements such as functionality and fashionableness, and the system, in response thereto, selects a coat close to the user's request as the best fit product for the user by referring to the ranking tables.

Further, ordinary sale and recommended sale are selectable at the time of sale. The ordinary sale introduces the best fit product for an individual by referring to ranking tables, to recommend the product. The recommended sale involves revision of the marks given to any element belonging to each ranked product when such an element is recommendable. The recommended sale introduces the best fit product for an individual by referring to a revised ranking table, to recommend the product. Further, the price of a product is quoted by the merchant, and the product is sold at that price.

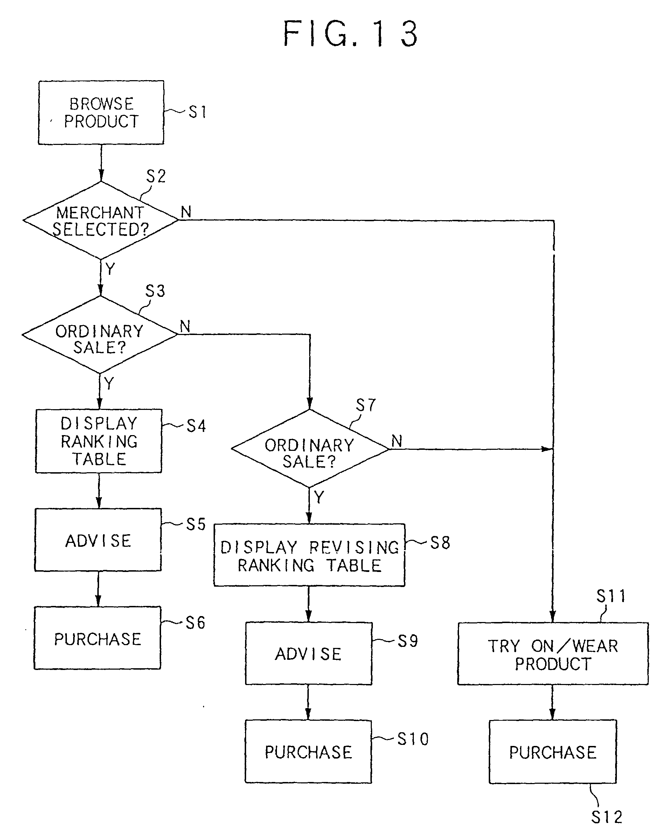

A flow of a selling process executed by the system according to this embodiment is shown in FIG. 13. As shown in the figure, when browsing a product (S1) before deciding to purchase the product, a user can request to have a merchant involved in the sale (S2). If the merchant is not involved, the user tries on/wears the product (S11) and then decides to purchase the product alone (S12). If the merchant is involved, the user selects either the ordinary sale or the recommended sale. Upon selection of the ordinary sale (S3), a ranking table (see Table 1) is displayed on the screen (S4) and so is merchant's advice (S5), whereby the user decides to purchase the product (S6). If, on the other hand, the user selects the recommended sale (S7), a revised ranking table (see Table 3) is displayed on the screen (S8) and so is merchant's advice (S9), whereby the user decides to purchase the product (S10).

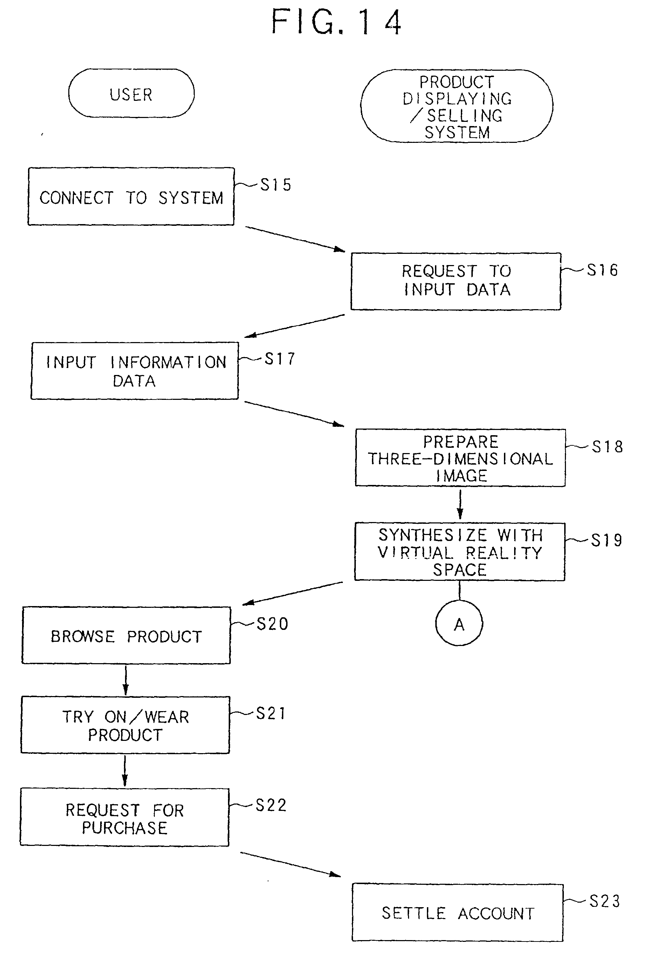

A flow of steps to be followed when a user of the system according to this embodiment purchases a product is shown in FIG. 14. The user establishes connection to this system using a terminal (S15). Upon connection, this system requests the user to input his/her private information data (S16), and then the user inputs his/her information data (S17). When the private information data has been inputted, this system prepares a three-dimensional image (S18), and then synthesizes the image with a virtual reality space (shopping mall) (S19), whereby the user can freely move around the virtual reality space (shopping mall) utilizing the three-dimensional image. In the shopping mall, the user can browse in a store where he/she wishes to do shopping (S20). The user can try on or wear products in the store (S21), and can purchase any product that the user likes. To purchase a product, the user sends a purchase request to this system (S22). This system settles the account in response to the purchase request (S23). Further, the user can make purchases via an IC card.

Further, third persons may appear in these virtual reality spaces in addition to users. For example, the system is provided with person selecting means to allow another person to appear. Another person means a nonexisting, fictitious character such as, for example, a CG-synthesized person, object or the like, or an arbitrarily selected existing person, or a third party registered as a merchant, or a third person registered as a member, or the like.

Specifically, the person selecting means is provided with data extracting means, merchant connecting means and general terminal connecting means. The data extracting means extracts information within a database as requested by a general user's terminal, in the case of selecting a nonexisting, fictitious person that is CG-prepared. The merchant connecting means can establish connection to the terminal of a merchant or the like involved in a store belonging to the shopping mall. The general terminal connecting means can establish connection to terminals of other general users simultaneously. It should be noted that the terminal of a general user means a third person registered as a member.

The data extracting means stores information data such as fictitious persons, objects and animals in the database, in the shopping mall which is a virtual reality space, and extracts such information data as requested by the terminal of a user. The information data is three-dimensionalized into a three-dimensional figure to be displayed on the screen, and the three-dimensional figure can move similarly to the user. The user can select a person or the like to do shopping with the person or the like, or to cause the person or the like to walk around, for example. For shopping, a program pre-installed to the system gives the user a comment such as "THAT SUITS YOU WELL," or guides the user around the store.

The merchant connecting means establishes connection to the terminal of, for example, a shoe store in a shopping mall which is a virtual reality space as requested by the user's terminal, allowing the user to communicate with the shoe store directly utilizing the network. Upon connection by the merchant connecting means, a person three-dimensionalized in advance from data about a merchant registered in the database is displayed on the screen so that the user can communicate with the merchant over the screen.

The general terminal connecting means allows for communication or shopping with other general terminal users in a virtual reality space, for example. Specifically, when requested by a user, the general terminal connecting means establishes connection to a general terminal selected by the user, thus allowing multiple general terminals to be connected simultaneously in the virtual reality space. In addition to this embodiment, the general terminal connecting means may establish connection to registered general terminals randomly so that only those general terminals having agreed to be connected can stay in the virtual reality space.

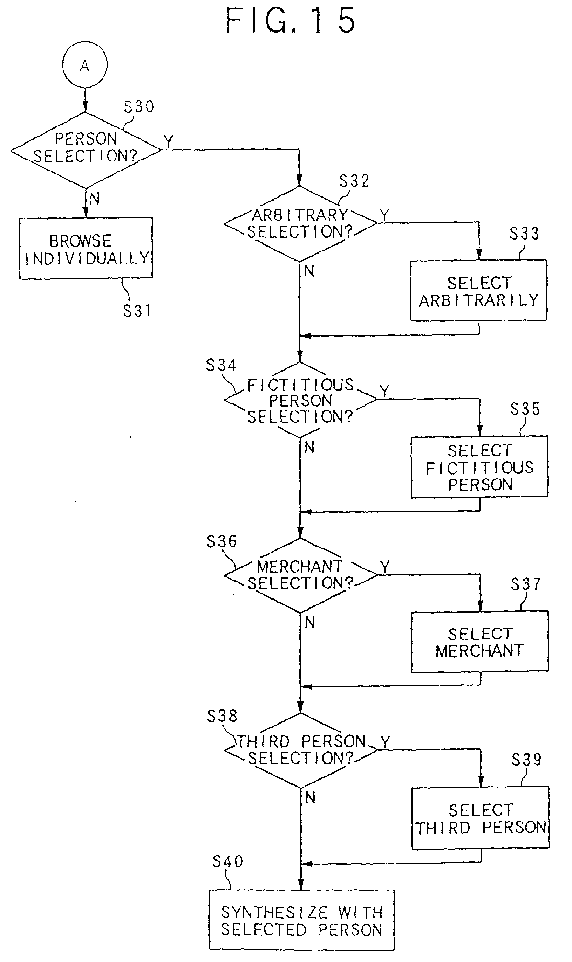

A flow of the person selecting means is shown in FIG. 15. The person selecting means can be utilized, for example, to cause a third person to appear in a shopping mall which is a virtual reality space (S30). If the person selecting means is not selected, only the user appears in the shopping mall and can do shopping, etc. alone (S31). If the person selecting means is selected, the user can select arbitrary selection means (S32) that causes an arbitrarily selected person to appear in the shopping mall, fictitious person selecting means (S34) that causes a fictitious person to appear, merchant selecting means (S36) that causes a merchant to appear, and third person selecting means (S38) that causes a third person to appear.

When the arbitrary selection means is selected (S32), the server randomly selects a person or the like for appearance in the shopping mall, from information data stored in the database in advance (S33).

When the fictitious person selecting means is selected (S34), the server selects a person or the like selected by the user from the information data stored in the database in advance (S35). Further, when the merchant selecting means is selected (S36), the server establishes connection to a merchant to select the merchant (S37). Still further, when a third person (a friend or the like) is selected (S38), the server establishes connection to the third person or the third person establishes connection to this system, whereby the server selects the third person (S39). The selected person is synthesized with the virtual reality space (shopping mall) (S40), and appears in the shopping mall together with the user.

Further, this system is provided with price negotiation means, whereby the user can negotiate with a merchant for a lower price over the screen. The price negotiation means comprises, for example, display means that displays prices quoted by the merchant, and display means that displays prices requested by the user, for price negotiation. A contract is concluded only when both parties agree on the price.

The above-indicated general terminal connecting means further comprises restricting means that imposes restrictions on the appearance of a third person. Various restrictions are necessary when a user causes a third party registered as a member to appear on the screen, and hence some restricting means for imposing the restrictions is needed.

The restricting means comprises third person's appearance permitting means, usage limiting means, leaving means, and rejecting means. The third person's appearance permitting means permits a third person to establish connection to a virtual reality space used by a user for appearance on the screen, only when the user specifies the third person, applies for permission, via a system managing server, to cause the specified third person to appear, and is given the permission (this process is required to be followed only for the first time). Further, the usage limiting means is used to limit the scope within which the third person can use the virtual reality space. This allows the user to specify how far the third person can be involved. When some inconvenience has occurred in a virtual reality space to which the user and the third person are connected, the leaving means allows any party to immediately leave the virtual reality space. While a third person who is permitted to appear on the user's screen can appear thereon, the rejecting means causes the server to reject a third person who is not permitted or who is permitted but has caused some inconvenience for some reason.

Warning means is provided which causes the server to warn a terminal if the terminal violates forbidden clauses, such as these restricted acts or immoral acts, antisocial acts or illegal acts. The warning means limits connection to any terminal violating the forbidden matters. For example, the warning means temporarily disables the connection of a terminal violating any forbidden matter, or totally disables its connection forever. This warning means comprises display means that displays warning messages in the form of documents, cues, voice or the like, suspension means that suspends commercial transactions, forbidding means that orders a violator to leave this system and forbids entrance into this system, closing means that closes this system, and deleting means that deletes the violator's membership registration.

Further, security/insurance means is also provided in case of various inconveniences including the robbery, replacement and tampering of information, unpermitted entry, and dissemination of computer viruses. The security/insurance means establishes a firewall for protection against damages and an insurance system for inflicted damages.

In another embodiment, a virtual reality space may be provided, in which a user can simulate trips. For example, a travel agency is prepared in a shopping mall within the virtual reality space. When a user applies to the travel agency for a package tour to Hawaii, for example, an image of Waikiki Beach in the Hawaiian islands appears as video within the virtual reality space, and the applicant can enter into this space alone or together with a third person to simulate a walk, yachting, etc.

In still another embodiment, a virtual reality space may be provided, in which a user can take lessons in a language school. For example, a language school is prepared in a shopping mall within the virtual reality space. When the user applies to the language school for an English conversation lesson, an image depicting a real schoolroom or a place related to a topic of the English conversation lessen (e.g., the sea if the lesson is about the sea) appears as video. The user can take the English conversation lessen in audible and/or textual form.

It should be noted that switching means is provided which allows a user to switch the user's eye level between a position from which the user can view the whole virtual reality space including the user and a position at which the user's eye level is located within the virtual reality space. The switching means is provided in consideration of the fact that how a thing looks like appears to be quite different when one takes a look at it from different positions.

### Industrial Applicability

As described in the foregoing, according to the present invention, a user can have a visual image of how the user would feel if the user wore a product, on the screen without even leaving home, whereby the user can minimize the gap between a browsed product and a real product, between the image of how the user would feel if the user tried on/wore a product and how the user really feels when actually trying on/wearing the same product, and hence can feel secure about purchasing the product.

## Claims

1. A product displaying/selling system connected to terminals of clients (1) via a network (4), **characterized by** comprising:
image input means (9b) for inputting information data about the clients;
product registration means (3b) for allowing merchants to register products;
product search means (3e) for searching a product requested by a client from the products registered by said product registration means;
image preparing/synthesizing means (3f) for synthesizing the product searched by said product search means with an image of the client prepared from information data inputted by said image input means into an image;
output means (3d) for outputting the image synthesized by said image preparing/synthesizing means;
settlement means (3c) for settling an account when the client purchases the product; and
a database (3g) for storing the information data, and wherein
the product requested by the client is synthesized with the image of the client to form a three-dimensional image for output to the terminal of the client, and
the client can purchase the product.

2. A product displaying/selling system according to claim 1, **characterized by** comprising:
product ranking means (3h) for ranking a product which is registered by said product registration means and which is specified.

3. A product displaying/selling system according to claim 1 **characterized in that**
said product search means is comprised of data input means (8a) and tally/search means (8b), for searching the product, and
said tally/search means tallies data inputted by said data input means with information stored in a database to search the product for which the data has tallied with the information.

4. A product displaying/selling system according to claim 1, **characterized in that**
said image preparing/synthesizing means is comprised of product input means (9a) image input means (9b), synthesizing/converting means (9c), and search means (9d), and
said synthesizing/converting means synthesizes an image searched from client information stored in a database by said image input means or an externally inputted image with a product searched from product information stored in a database by said product input means, for conversion into a predetermined form.

5. A product displaying/selling system according to claim 1, **characterized in that** said product search means is comprised of a virtual space (13) and tally/search means (12a), said virtual space being formed of image preparing means (13a), image synthesizing means (13b), and products identified by product information stored in a database, and
in said virtual space, a pseudo store in which the products identified by the product information stored in said database are arranged at predetermined locations is prepared by image preparing means, and the image of the client can be synthesized with said virtual space for location in said virtual space, and
in the pseudo store, a product which is located in the pseudo store and selected by the image of the client located in said virtual space is synthesized with the image of the client, to allow the client to try on or wear the product.

6. A product displaying/selling system according to claim 1, **characterized in that**
said settlement means performs, when the client purchases a product/service, a charging process in which when an amount for settlement is paid before or after a scheduled settlement date as a reference, the amount for settlement varies depending on a difference in time period from the scheduled settlement date.

7. A product displaying/selling system according to claims 1 to 6, **characterized by** comprising:
three-dimensional image (S18) selecting means and product selecting means, and
wherein
a client freely locates a product selected by said product selecting means in a three-dimensional image (S18) selected by said three-dimensional image selecting means for output to a terminal of the client as the three-dimensional image, and can purchase the product via said settlement means.

8. A product displaying/selling system according to claim 7, **characterized by** comprising
product ranking means (3h) for ranking a product which is selected by said product selecting means and which is specified.

9. A product displaying/selling system according to claim 2 or 8, **characterized in that**
said product ranking means (3h) causes an external ranking institution to rank products, and is provided with a function for displaying a ranking of a product having tallied with the specified product, on a screen of the terminal of the client.

10. A product displaying/selling system according to claim 2 or 8, **characterized in that**
said product ranking means (3h) is provided with element fields for indicating elements related to product quality, product ranking fields for giving marks to the elements to rank products of respective companies, and a client input field for indicating marks given by the client to the elements to rank the elements, and
is also provided with a function for comparing the marks inputted to the client input field with the marks given to rank the products of the respective companies to display, in terms of marks, best fit rankings for the client on the screen of the terminal of the client.

11. A product displaying/selling system according to claim 2 or any of claims 8 to 10 **characterized in that**
said product ranking means (3h) is provided with a revising field for recommended sale by a merchant.

12. A product displaying/selling system according to any of claims 1 to 11 **characterized by** comprising
person selecting means, and
wherein
a person selected by said person selecting means is specified, and
the specified person is located to form the three-dimensional image.

13. A product displaying/selling system according to any of claims 7 to 12, **characterized by** comprising
image input means (9b), and a function for locating an image inputted by said image input means (9b) in the three-dimensional image.

14. A product displaying/selling system according to claim 1 or 13, **characterized in that**
said image input means (9b) is provided with rails (19a) arranged in a manner surrounding a box upward, downward, leftward, rightward, frontward, and rearward, and with image devices (19) arranged to be movable along the rails (19a) in six directions which are upward, downward, leftward, rightward, frontward, and rearward directions, and
said means (9b) is provided with a function for preparing a three-dimensional image from an image formed using said image devices moving along the six directions, for image input.

15. A product displaying/selling system according to any of claims 1 to 14, **characterized by** comprising price negotiation means for allowing the client to conduct price negotiations with a merchant when the client purchases a product.

16. A product displaying/selling system according to any of claims 1 to 15, **characterized by** comprising warning means for limiting connection to a terminal violating forbidden matters.
